(19) Europäisches Patentamt
European Patent Office
Office européen des brevets

(11) **EP 1 300 742 B1**

(12) **EUROPÄISCHE PATENTSCHRIFT**

(45) Veröffentlichungstag und Bekanntmachung des Hinweises auf die Patenterteilung:
**21.01.2009   Patentblatt 2009/04**

(51) Int Cl.:
***G05B 23/00*** *(2006.01)*

(21) Anmeldenummer: **01123960.5**

(22) Anmeldetag: **08.10.2001**

(54) **Verfahren zur Prüfung von Bauteilen**

Method for component testing

Procédé de test de composants

(84) Benannte Vertragsstaaten:
**DE FR GB**

(43) Veröffentlichungstag der Anmeldung:
**09.04.2003   Patentblatt 2003/15**

(73) Patentinhaber: **Ford Global Technologies, LLC Dearborn, MI 48126 (US)**

(72) Erfinder:
• **Morawitz, Urban**
  **50765 Köln (DE)**

• **Louven, Georg**
  **56567 Neuwied (DE)**

(74) Vertreter: **Drömer, Hans-Carsten**
**Ford-Werke Aktiengesellschaft,**
**Patentabteilung NH/DRP,**
**Henry-Ford-Strasse 1**
**50725 Köln (DE)**

(56) Entgegenhaltungen:

| | |
|---|---|
| **US-A- 2 700 301** | **US-A- 5 519 333** |
| **US-A- 5 745 390** | **US-B1- 6 175 812** |

## Beschreibung

Die Erfindung betrifft ein Verfahren zur Prüfung von Bauteilen, insbesondere von Bauteilen einer Brennkraftmaschine, wobei das Bauteil verschiedenen Belastungszuständen ausgesetzt wird.

Bauteile von komplexen Systemen - wie beispielsweise Motoren oder Brennkraftmaschinen von Kraftfahrzeugen - werden für eine bestimmte vorgesehene Lebensdauer konzipiert. Dabei ist ein möglichst genaues Einhalten der angestrebten Lebensdauer wünschenswert, da durch eine Konstruktion mit größere Lebensdauer die Bauteile in der Regel aufwendiger und damit teurer werden, und da durch eine Konstruktion mit kürzerer Lebensdauer die Lebensdauer des Gesamtsystems, welche vom schwächsten Glied einer Kette bestimmt wird, in unerwünschter Weise verkürzt werden kann. Es ist daher besonders wichtig, geeignete Verfahren zur Belastungsprüfung von Bauteilen zur Verfügung zu haben, um die mit einer bestimmten Konstruktionsart erreichbare Lebensdauer eines Bauteils feststellen zu können. Derartige Verfahren müssen dazu geeignet sein, die Auswirkungen einer in der Regel mehrjährigen realen Benutzung in einem erheblich verkürzten Zeitraum zu simulieren.

Die US 6 175 812 B1 beschreibt Testverfahren zum Erkennen von anfänglich defekten integrierten Bauteilen (ICs) durch einen "Burn-in Prozess", bei welchem die ICs einer erhöhten Temperatur und einer erhöhten elektrischen Spannung ausgesetzt werden. Dabei werden die ICs in regelmäßigen Abständen überprüft, und aus dem Verlauf ihrer Ausfallrate wird abgeschätzt, wann das Testverfahren abgebrochen werden kann.

Auch die US 5 519 333 beschäftigt sich mit dem Aussortieren von ICs mit Produktionsfehlern, wobei der übliche Burn-in Test durch die Beobachtung von Strömen bei Schaltvorgängen in den ICs ersetzt wird.

Ein Verfahren zum Erkennen von Produktionsfehlern bei Brennkraftmaschinen wird in der US 2 700 301 beschrieben.

Zur Prüfung von Bauteilen aus einem komplexen System ist aus der US 5 745 390 ein Verfahren bekannt, bei dem Korrelationsmatrizen berechnet werden, um die minimale Anzahl notwendiger Tests und Bauteile zu bestimmen, welche für eine parallele Prüfung der Komponenten eines Motors ohne Verwendung des gesamten Motors benötigt werden. Die Ermittlung der Korrelationsmatrizen erfolgt dabei auf der Basis subjektiver Bewertungen von Einflußfaktoren durch Konstruktionsingenieure. Nachteilig bei diesem Verfahren ist ein erheblicher Aufwand für den Entwurf der Prüfungsverfahren sowie eine unzureichende Korrelation der Prüfun- gen mit der Praxis.

Vor diesem Hintergrund bestand eine Aufgabe der vorliegenden Erfindung darin, ein Verfahren zur Prüfung von Bauteilen wie insbesondere Bauteilen einer Brennkraftmaschine bereitzustellen, welches einen hohen Praxisbezug der erhaltenen Ergebnisse sicherstellt.

Vorzugsweise soll es das Verfahren erlauben, die Gesamtdauer der Prüfung bei einer Änderung der vorgegebenen Prüfungskriterien festzulegen.

Diese Aufgabe wird durch ein Verfahren mit den Merkmalen des Anspruchs 1 gelöst.

Vorteilhafte Ausgestaltungen sind in den Unteransprüchen enthalten.

Der Kern des erfindungsgemäßen Verfahrens zur Prüfung von Bauteilen - wie insbesondere den Bauteilen einer Brennkraftmaschine - besteht darin, daß das zu prüfende Bauteil verschiedenen Belastungszuständen ausgesetzt wird, wobei die Zeitdauer, während der das Bauteil jeweils einem Belastungszustand ausgesetzt wird, in Abhängigkeit von der relativen Zeitdauer festgelegt wird, welche das Bauteil im Verlauf seiner realen Verwendung in diesem Belastungszustand verbringt. Insbesondere können - ausgehend von einem gegebenen Test mit vorgegebenen Zeitdauern - die Zeitdauern in verschiedenen Belastungszuständen proportional der jeweiligen Zeitdauer verkürzt oder verlängert werden, welche das Bauteil im Verlauf seiner realen Verwendung in diesem Belastungszustand verbringt.

Das vorgeschlagene Verfahren hat somit den Vorteil, daß bei der Belastungsprüfung berücksichtigt wird, nach welchem Muster das Bauteil bei der realen Verwendung belastet wird. Das heißt, daß bei der realen Verwendung relativ häufig beziehungsweise lange auftretende Belastungszustände mit einem höheren Gewicht geprüft werden als nur selten und/oder nur kurz auftretende Zustände. Auf diese Weise wird eine erheblich größere Aussagekraft des Prüfungsverfahrens sowie eine größere Praxisrelevanz erreicht.

Die relative Zeitdauer, welche das Bauteil während seiner realen Verwendung in einem bestimmten Belastungszustand verbringt, wird vorzugsweise als Durchschnittswert aus Meßdaten bestimmt, die bei realen Verwendungen des Bauteils gewonnen werden. Im Rahmen der Konstruktion einer Brennkraftmaschine kann beispielsweise das Fahrverhalten verschiedener Fahrer über einen längeren Zeitraum von typischerweise einigen Monaten beobachtet werden, um Daten darüber zu gewinnen, wie lange sich der Motor jeweils in Zuständen bestimmter Drehzahl und/oder Last befindet. Aus den gewonnenen Daten lassen sich dann Durchschnittswerte oder auch Extremwerte (worst case) gewinnen, die einer Belastungsprüfung der Bauteile des Motors zugrunde gelegt werden können.

Gemäß einer Weiterbildung des Verfahrens wird die Zeitdauer, welche das Bauteil einem bestimmten Belastungszustand ausgesetzt wird, auch in Abhängigkeit von der Belastungsstärke (severity) dieses Belastungszustandes bestimmt. Verschiedene Belastungszustände haben bekanntermaßen unterschiedlich gravierende Auswirkungen auf das Bauteil, was mit der Belastungsstärke quantifiziert wird. Die Belastungsstärke kann sich dabei ihrerseits aus mehreren Aspekten zusammensetzen entsprechend den verschiedenen Auswirkungen beziehungsweise Angriffspunkten einer Belastung an einem Bauteil. Die Berücksichtigung der Belastungsstärken bei der zeitlichen Verteilung der Belastungszustände während einer Prüfung hat den Vorteil, daß besonders stark angreifende Belastungszustände vermehrt und eher auswirkungsfreie Belastungszustände vermindert geprüft werden können, um auf diese Weise den Prüfungszeitraum zu komprimieren.

Die Belastungsstärke wird vorzugsweise aus dem Einfluß verschiedener Streßparameter im jeweiligen Belastungszustand bestimmt. Streßparameter sind Größen, welche aufgrund theoretischer Überlegungen oder experimenteller Untersuchungen einen bekannten schädigenden Einfluß auf das Bauteil ausüben, der zum Funktionsverlust und/oder zu Fehlerzuständen führen kann. Zum Beispiel sind Vibrationen, die Temperatur oder Feuchtigkeit Streßparameter, von deren Größe die in einem bestimmten Belastungszustand hervorgerufene Belastung eines Bauteils abhängt. Mit Hilfe der Streßparameter kann daher die Gesamtgröße der Belastungsstärke analytisch in Einzelkomponenten zerlegt und so berechnet werden.

Alternativ oder zusätzlich kann die Belastungsstärke eines bestimmten Belastungszustandes auch empirisch auf der Basis der an einem Bauteil hervorgerufenen Veränderungen bestimmt werden. Typischerweise wird dabei das Bauteil über einen längeren Zeitraum einem bestimmten Belastungszustand ausgesetzt, und anschließend werden die beobachteten Veränderungen des Bauteils zur Bestimmung der Belastungsstärke quantitativ erfaßt.

Die Kenntnis von Belastungsstärken hat den weiteren Vorteil, daß gemäß einer Weiterbildung des Prüfungsverfahrens das Bauteil nur solchen Belastungszuständen ausgesetzt werden kann, deren Belastungsstärke oberhalb eines Schwellwertes liegt. Nicht oder nur wenig relevante Belastungszustände mit einer geringen Belastungsstärke können daher aus dem Prüfungsverfahren ausgeklammert werden, was die Gesamtdauer der Prüfung entsprechend verkürzt.

Vorzugsweise werden bei einer solchen Reduktion der Prüfung auf kritische Belastungszustände die einzelnen Testzeiten so gewählt, daß die Summe der Produkte aus den Belastungsstärken und den Zeitdauern, welche das Bauteil während seiner realen Verwendung im zugehörigen Belastungszustand verbringt, gleich der Summe der Produkte aus den kritischen Belastungsstärken (oberhalb des oben genannten Schwellwertes) und den Zeitdauern, welche das Bauteil während der Prüfung im zugehörigen Belastungszustand verbringt (Testzeiten), ist. Vereinfacht ausgedrückt bedeutet dies, daß das Zeitintegral der Belastungsstärken bei der realen Verwendung gleich dem Zeitintegral der Belastungsstärken beim Prüfungsverfahren sein soll, wobei ferner die Testzeiten mit einem gemeinsamen Faktor proportional den realen Verwendungszeiten sein sollen.

Der während eines Belastungstests vorzunehmende Wechsel zwischen den verschiedenen Belastungszuständen erfolgt vorzugsweise zufallsgesteuert. Ein jeder Belastungszustand wird dabei in der zufälligen Reihenfolge so oft ausgewählt, bis das Bauteil insgesamt die vorgegebene Zeitdauer in diesem Belastungszustand verbracht hat.

Die Belastungszustände werden vorzugsweise durch einen Satz an Zustandsparametern beschrieben. Die Zustandsparameter sind dabei die Größen, welche während der Belastungsprüfung gezielt eingestellt und verändert werden, um die verschiedenen möglichen Belastungszustände zu simulieren. Typische Zustandsparameter für die Prüfung von Brennkraftmaschinen sind zum Beispiel die Drehzahl und die Last der Brennkraftmaschine.

Häufig lassen sich für Belastungstests sogenannte Beschleunigungsparameter ermitteln, deren Wert die Größe der erzeugten Belastungen und damit die Gesamtdauer des Tests beeinflußt. Ein Beispiel für einen derartigen Beschleunigungsparameter ist die Temperatur, deren Erhöhung in der Regel zu einer stärkeren Belastung führt. Über die Veränderung der Beschleunigungsparameter kann daher eine Verkürzung der Gesamtdauer der Prüfung bei etwa gleichbleibender Gesamtbelastung erzielt werden. Das Verhältnis der Lebensdauer eines Bauteils unter normalen Bedingungen zur Lebensdauer unter der Wirkung eines Beschleunigungsparameters wird auch als "Beschleunigungsfaktor" bezeichnet.

Im Folgenden wird die Erfindung anhand eines Ausführungsbeispiels aus dem Automobilbereich näher erläutert.

In der Vergangenheit basierte nahezu jeder Motortest auf den Erfahrungen von Ingenieuren. Versagensmodi und die Lebensdauer verkürzende Parameter wurden dabei zu einem Testverfahren zusammengesetzt, ohne daß jedoch eine Korrelation zu den tatsächlichen Forderungen aus der Praxis bestand. Änderungen in den Anforderungen an die Bauteile und Abweichungen im Benutzerprofil konnten dabei nicht implementiert werden. Weiterhin war weder eine Abschätzung der notwendigen Testverlängerung aufgrund von Haltbarkeitszielen noch eine Feinabstimmung auf spezielle Fahrzeuganwendungen möglich. Schließlich konnte auch der Einfluß spezieller Streßparameter nicht festgestellt werden.

So basiert beispielsweise der bekannte Wärme-Feuchtigkeits-Test für die Haltbarkeit eines Zahnriemen-Antriebssystems auf den folgenden Parametern:

- Leerlaufdrehzahl im Zustand ohne Last;

- Drehzahl bei maximaler Last;

- hohe Beschleunigung/Verzögerung;

- Hitze;

- Feuchtigkeit.

Alle genannten Parameter haben definitiv einen verkürzenden Einfluß auf die Lebensdauer des Zahnriemens. Der durchgeführte Test enthält den abwechselnden Betrieb mit Drehzahlen im Leerlauf und bei maximaler Leistung mit kurzen beschleunigenden beziehungsweise verzögernden Perioden unter hoher Temperatur und Feuchtigkeit. Die Gesamtdauer des bekannten Tests wird z.B. aufgrund von Vergleichen mit anderen Tests (z.B. Fahrzeugdauertest) und Ergebnissen an Flottenfahrzeugen auf 600 Stunden festgelegt. Ein im Rahmen des Tests zufällig auftretendes Bauteilversagen kann zur Ausbalancierung des Tests verwendet werden. Ein derartiger Test erlaubt zwar eine Auswertung bezogen auf eine vorbestimmte Kilometerleistung des Fahrzeuges. Der Test besitzt jedoch keine direkte Korrelation zu der realen Verwendung des Fahrzeugs in der Praxis bzw. zu den in der Praxis auftretenden atmosphärischen Zuständen. Weiterhin ist keine direkte Auswertung des Einflusses spezieller Streßparameter vorgesehen, und der Test kann nicht für verschiedene Kilometerleistungen oder unterschiedliche Verwendungsarten des Fahrzeuges interpoliert werden. Bei einer Erhöhung der angestrebten Lebensdauer-Kilometerleistung um den Faktor 1,5 wird der Test typischerweise um den Faktor 2 auf eine Gesamtdauer von 1200 Stunden verlängert, da keine Möglichkeit für eine genauere Abschätzung der benötigten Testdauer besteht. Weiterhin kann der Test nicht an spezielle Fahrzeuganwendungen angepaßt werden, da die Einflüsse wie Resonanzfrequenzen, Temperaturen usw. in diesem Test nicht ausreichend aufeinander abgestimmt sind.

Es wurde daher ein - nicht nur im Automobilbereich - anwendbarer Testprozeß für die Belastungsprüfung von Bauteilen entwickelt, welcher eine direkte Korrelation zwischen der Testdauer und der Kilometerleistung bzw. der Verwendungszeit durch einen Benutzer sicherstellt. Dieses nachfolgend als "Key Life Test" bezeichnete Verfahren wird nachstehend am Beispiel eines Zahnriementests beschrieben.

Vor dem Entwurf des Tests sind verschiedene Voraussetzungen zu erfüllen. So muß zum Beispiel klar definiert werden, welches Bauteil (Motorfamilie, Motor, System, Subsystem oder Anordnung) betroffen ist und welche Versagensmodi auftreten können. Weiterhin sind die Bedingungen des Einsatzes des Tests festzulegen, d.h. beispielsweise Motortest, Versuchsstand-Test (rig test) oder analytische Untersuchung.

Als weitere Voraussetzung für den Entwurf des Testverfahrens werden statistische Daten der realen Verwendung des Bauteils in Form sogenannter Kundenverwendungsprofile (CUP) gewonnen. Dazu werden Fahrzeuge mit Datenaufzeichnungsgeräten ausgestattet, um Informationen über die Motordrehzahl und die zugehörige Motorlast (z.B. definiert über die abgegebene Motorleistung) zu gewinnen. Diese typischerweise mit einer Frequenz von 10 Hz gesammelten Informationen geben die relative Aufenthaltsdauer des Motors in jedem Motor-Betriebszustand (Drehzahl/Last) entsprechend dem Fahrverhalten eines Kunden wieder. Die minimale Aufzeichnungszeit sollte dabei mehr als drei Monate pro Fahrzeug betragen, woraufhin beispielsweise eine Vorhersage für eine angestrebte Lebensdauer von ca. zehn Jahren beziehungsweise 150 Tausend Meilen (ca. 240 Tausend Kilometer) möglich ist.

Die nachfolgende Tabelle gibt einen Ausschnitt aus den auf diese Weise gewonnenen Meßdaten wieder, wobei die Spalten der Tabelle für verschiedene Motordrehzahlen n und die Zeilen der Tabelle für die relative Motorlast L stehen, und wobei die Einträge in der Tabelle die Zeit $t_i$ (in Stunden) angeben, die während des beobachteten Fahrverhaltens eines Fahrers im jeweiligen Zustand verbracht wurde.

Tabelle 1: Kundenverwendungsprofil "CUP"

|  | n = 4000 [U/min] | 4500 [U/min] | 5000 [U/min] | 5500 [U/min] | 6000 [U/min] | ... |
|---|---|---|---|---|---|---|
| ... | $t_i$ | ... | ... | ... | ... | ... |
| L = 0,2 | ... | 0,0111 h | 0,0004 h | 0,0004 h | 0,0007 h | ... |
| 0,3 | ... | 0,0236 h | 0,0025 h | 0,0001 h | 0,0001 h | ... |
| 0,4 | ... | 0,0127 h | 0,0004 h | 0,0004 h | 0 h | ... |
| 0,5 | ... | 0,0185 h | 0,0012 h | 0 h | 0,0001 h | ... |
| 0,6 | ... | 0,0220 h | 0,0010 h | 0 h | 0 h | ... |
| 0,7 | ... | ... | ... | ... | ... | ... |

Für eine Auswertung der Testergebnisse ist es wichtig, die geprüften Bauteile mit verwendeten Bauteilen aus der Praxis zu vergleichen. Zu diesem Zweck werden vor der Durchführung des Tests in der Praxis benutzte Bauteile gesammelt und sorgfältig untersucht. Dabei ist jeder mögliche Versagensmodus, der sich an den Bauteilen zeigt, in Betracht zu ziehen. Aus der Auswertung der Bauteile ist ferner eine Datenbasis für die Anpassung des Key Life Tests zu erstellen. Zu diesem Zweck sind die Zustände der Teile in Bezug auf ihr Alter, ihre Verwendungszeit und, falls möglich, ihre Verwendungsumstände aufzuzeichnen. Falls eine solche Sammlung nicht möglich ist, kann auch auf die Erfahrungen aus anderen Tests zurückgegriffen werden.

Sodann kann die Entwicklung des eigentlichen Key Life Tests erfolgen. Basierend auf Versuchen, Forschungen oder auf der Erfahrung werden dabei Versagensmodi mit verschiedenen Einflußfaktoren auf die Lebensdauer des Bauteils verknüpft. Diese Faktoren können in sogenannte Streßparameter, welche gegeben sind und nicht eliminiert werden können, und sogenannte Beschleunigungsparameter unterteilt werden, welche helfen können, den Test abzustimmen oder zu beschleunigen.

Im ersten Schritt der Testentwicklung werden Streßparameter in sogenannten Belastungstabellen erfaßt, welche die Belastungsstärke des jeweiligen Streßparameters in Abhängigkeit von der Motorlast und der Drehzahl zeigen. So geben die nachfolgenden beiden Tabellenausschnitte die die Lebensdauer verkürzenden Einflüsse der Frequenz der Zahnriemenvibration und der Motordrehzahl wieder, wobei die Belastungsstärke als Zahl mit der "Pseudodimension" $\sigma$ zwischen 0 $\sigma$ (minimale Belastungsstärke) und 10 $\sigma$ (höchste Belastungsstärke) ausgedrückt ist. Die Bedeutung der Zeilen (Last) und Spalten (Drehzahl) entspricht hier wie bei allen nachfolgenden Tabellen der ersten Tabelle 1.

Tabelle 2: Belastungsstärke der Frequenz der Zahnriemenschwenks/Vibrationen (Motor: 1,8 l Vierzylinder)

|  | n = 4000 [U/min] | 4500 [U/min] | 5000 [U/min] | 5500 [U/min] | 6000 [U/min] | ... |
|---|---|---|---|---|---|---|
| ... | ... | ... | ... | ... | ... | ... |
| L = 0,2 | ... | 0,1 σ | 0,1 σ | 1,0 σ | 5,0 σ | ... |
| 0,3 | ... | 1,0 σ | 0,1 σ | 1,0 σ | 5,0 σ | ... |
| 0,4 | ... | 1,0 σ | 0,1 σ | 3,0 σ | 5,0 σ | ... |
| 0,5 | ... | 0,1 σ | 0,1 σ | 5,0 σ | 5,0 σ | ... |
| 0,6 | ... | 5,0 σ | 0,1 σ | 0,1 σ | 1,0 σ | ... |
| 0,7 | ... | ... | ... | ... | ... | ... |

Tabelle 3: Belastungsstärke der Motordrehzahl (Motor: 1,8 l Vierzylinder)

|  | n = 4000 [U/min] | 4500 [U/min] | 5000 [U/min] | 5500 [U/min] | 6000 [U/min] | ... |
|---|---|---|---|---|---|---|
| ... | ... | ... | ... | ... | ... | ... |
| L = 0,2 | ... | 6,6 σ | 7,4 σ | 8,2 σ | 9,0 σ | ... |
| 0,3 | ... | 6,6 σ | 7,4 σ | 8,2 σ | 9,0 σ | ... |
| 0,4 | ... | 6,6 σ | 7,4 σ | 8,2 σ | 9,0 σ | ... |
| 0,5 | ... | 6,6 σ | 7,4 σ | 8,2 σ | 9,0 σ | ... |
| 0,6 | ... | 6,6 σ | 7,4 σ | 8,2 σ | 9,0 σ | ... |
| 0,7 | ... | ... | ... | ... | ... | ... |

Alle einzelnen Belastungsstärken der verschiedenen Streßparameter werden sodann in einer einzigen Tabelle der Gesamtbelastungsstärke zusammengefaßt. Diese Zusammenfassung kann insbesondere in einer zellenweisen Multiplikation der einzelnen Belastungsstärken bestehen. Basierend auf den obigen Beispielen kann zum Beispiel die nachfolgende Tabelle der Gesamtbelastungsstärken $s_i$ erhalten werden, welche optional vor einer Weiterverwendung auch auf den Maximalwert 10 normiert werden kann:

Tabelle 4: Gesamtbelastungsstärke (Motor: 1,8 l Vierzylinder)

|  | n = 4000 [U/min] | 4500 [U/min] | 5000 [U/min] | 5500 [U/min] | 6000 [U/min] | ... |
|---|---|---|---|---|---|---|
| ... | $s_i$ | ... | ... | ... | ... | ... |
| L = 0.2 | ... | 0,7 σ | 0,7 σ | 8,2 σ | 45,0 σ | ... |
| 0.3 | ... | 6,6 σ | 0,7 σ | 8,2 σ | 45,0 σ | ... |

(fortgesetzt)

|  | n = 4000 [U/min] | 4500 [U/min] | 5000 [U/min] | 5500 [U/min] | 6000 [U/min] | ... |
|---|---|---|---|---|---|---|
| **0.4** | ... | 6,6 σ | 0,7 σ | 24,6 σ | 45,0 σ | ... |
| **0.5** | ... | 0,7 σ | 0,7 σ | 41,0 σ | 45,0 σ | ... |
| **0.6** | ... | 33,0 σ | 0,7 σ | 0,8 σ | 9,0 σ | ... |
| **0.7** | ... | ... | ... | ... | ... | ... |

Multipliziert man nun Tabelle 4 zellenweise mit einem Kundenprofil (Tabelle 1) und errechnet hieraus die Summe aller Einträge, so erhält man einen Faktor TSF, der die Bedeutung aller Streßparameter und die des Kunden beschreibt:

$$TSF = \sum_i t_i s_i \qquad [\mathbf{h\sigma}]$$

Hierbei ist das Kundenprofil als Kennfeld in absoluten Stunden auf das jeweilige Unternehmensziel ausgerichtet.

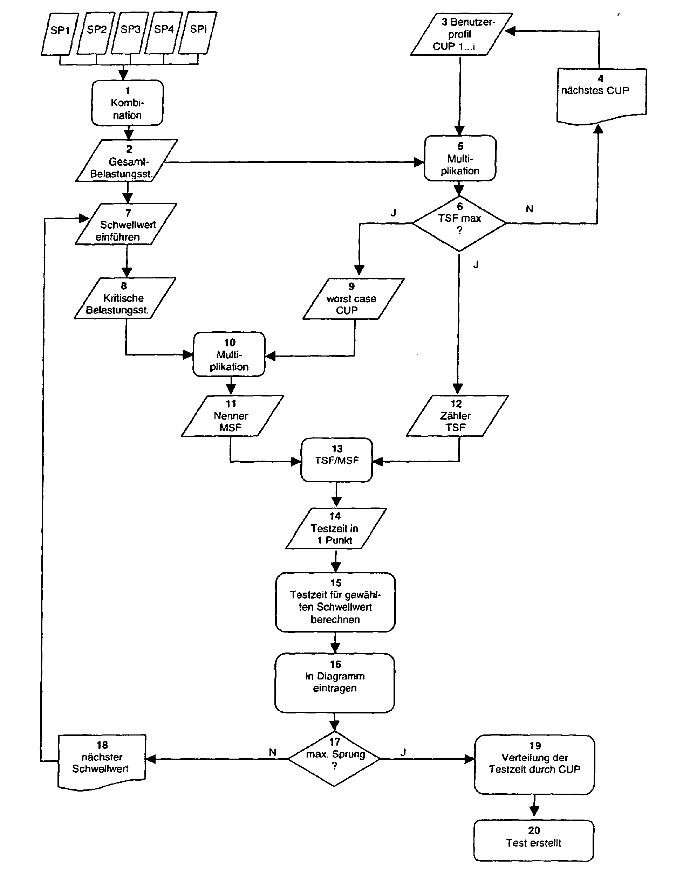

Um die Effizienz des durchzuführenden Tests zu erhöhen, werden ausgehend von Tabelle 4 Zustände geringer Belastungsstärke aus dem Testverfahren ausgeschlossen, so daß nur Zustände berücksichtigt werden, die das zu prüfende Bauteil tatsächlich in erheblichem Maße belasten. Diese Auswahl erfolgt beispielsweise dadurch, daß in der Tabelle der Gesamtbelastungsstärken alle Einträge auf 0 gesetzt werden, die kleiner als ein vorgegebener Wert sind (zum Beispiel 30% unter dem Maximalwert in der Tabelle; eine genauere Beschreibung eines Auswahlverfahrens erfolgt später unter Bezug auf die Figur). Daraufhin wird die nachfolgende Tabelle erhalten:

Tabelle 5: Gesamtbelastungsstärken $\hat{s}_i$ in kritischen Belastungszuständen für den Test

|  | 4000 [U/min] | 4500 [U/min] | 5000 [U/min] | 5500 [U/min] | 6000 [U/min] | ... |
|---|---|---|---|---|---|---|
| **...** | $\hat{s}_i$ | ... | ... | ... | ... | ... |
| **L = 0,2** | ... | 0 | 0 | 0 | 45,0 | ... |
| **0,3** | ... | 0 | 0 | 0 | 45,0 | ... |
| **0,4** | ... | 0 | 0 | 0 | 45,0 | ... |
| **0,5** | ... | 0 | 0 | 41,0 | 45,0 | ... |
| **0,6** | ... | 33,0 | 0 | 0 | 0 | ... |
| **0,7** | ... | ... | ... | ... | ... | ... |

Schließlich wird aus Tabelle 5 der kritischen Belastungszustände und der Tabelle 1 des Kundenverwendungsprofils die nachfolgende Tabelle 6 erhalten, welche die in verschiedenen, durch die Drehzahl und die Motorlast definierten Belastungszuständen zu verbringenden Gesamttestzeiten $\hat{t}_i$ (in Stunden) wiedergibt:

Tabelle 6: Testdauer $\hat{t}_i$ in den kritischen Belastungszuständen

|  | n = 4000 [U/min] | 4500 [U/min] | 5000 [U/min] | 5500 [U/min] | 6000 [U/min] | ... |
|---|---|---|---|---|---|---|
| **...** | $\hat{t}_i$ | ... | ... | ... | ... | ... |
| **L = 0,2** | ... | 0 | 0 | 0 | 5,21 h | ... |
| **0,3** | ... | 0 | 0 | 0 | 5,04 h | ... |
| **0,4** | ... | 0 | 0 | 0 | 0 | ... |
| **0,5** | ... | 0 | 0 | 0 | 5,04 h | ... |
| **0,6** | ... | 16,43 h | 0 | 0 | 0 | ... |
| **0,7** | ... | ... | ... | ... | ... | ... |

Zur Erzeugung der Tabelle 6 werden die folgenden Schritte vorgenommen:

Das Kundenprofil (Tabelle 1) wird so normiert, dass der dem Punkt höchster Belastungsstärke von Tabelle 5 entsprechende Eintrag den dimensionslosen Wert 1 annimmt (d.h. für Tabelle 1: Division aller Einträge durch 0,0007 h).

Das so normierte Kundenprofil wird mit dem kritischen Belastungsprofil (Tabelle 5) zellenweise multipliziert.

Es wird die Summe MSF aller Zelleneinträge der Tabelle aus Schritt b) berechnet, und der oben definierte Faktor TSF (= Summe aller zellenweisen Produkte von Tabelle 1 und Tabelle 4) wird durch MSF dividiert; das so erhaltene Ergebnis ist die Testzeit $\hat{t}_M$ am Punkt höchster Belastung von Tabelle 5;

Die übrigen Testzeiten $\hat{t}_i$ für die kritischen Belastungspunkte werden dann durch Multiplikation von $\hat{t}_M$ mit dem jeweiligen Eintrag aus dem normierten Kundenprofil (Schritt a)) erhalten.

Mit den Abkürzungen

$i \in \{1,2,...n\}$      Index für die Motorzustände, die durch eine Drehzahl n und eine Motorlast L beschrieben werden (d.h. laufender Index für die Zeilen/Spalten in den Tabellen 1-6)

$t_i$      Zeitdauern des Kundenprofils (Tabelle 1)

$s_i$      Gesamtbelastungsstärken (Tabelle 4)

$\hat{s}_i$      Gesamtbelastungsstärken in den kritischen Belastungszuständen (Tabelle 5)

$\hat{t}_i$      im Zustand i zu verbringende Testzeit (gesucht);

$f$      Proportionalitätsfaktor zwischen Kundenzeiten und Testzeiten: $\hat{t}_i = f \cdot t_i$

läßt sich das beschriebenen Verfahren durch folgende Formel wiedergeben:

$$TSF = \sum_{i=1}^{n} t_i s_i \overset{!}{=} \sum_{i=1}^{n} \hat{t}_i \hat{s}_i \overset{!}{=} f \sum_{i=1}^{n} t_i \hat{s}_i$$

Die im realen Betrieb des Bauteils erfahrene, zeitintegrierte Gesamtbelastung TSF soll also gleich der zeitintegrierten Gesamtbelastung im Test sein, wobei im Test jedoch nur die kritischen Belastungszustände untersucht werden (man beachte, daß viele $\hat{s}_i$ gleich Null sind).

Entsprechend der Tabelle 6 ist zum Beispiel der Belastungszustand mit der Motordrehzahl 4500 und der relativen Motorbelastung von 0.6 besonders relevant und daher entsprechend lange (16,43 Stunden) zu testen, während viele andere Belastungszustände im Test ausgespart werden können (Eintrag 0).

Bei der Durchführung des Tests kann nach einem Zufallsmuster zwischen den zu testenden Belastungszuständen hin und her gesprungen werden, um dem realen Benutzungsverhalten durch einen Kunden nahe zu kommen. Dabei ist darauf zu achten, daß in der Summe in den jeweiligen Belastungszuständen die in der Tabelle 6 vorgegebenen Zeiten verbracht werden.

Durch Addition der Einträge in obiger Tabelle 6 kann die Gesamtzeit des Tests festgestellt werden.

In bestimmten Fällen können auch Beschleunigungsparameter zur Ausführung des Tests implementiert werden, falls diese einen klaren Einfluß haben und ihre Berechnung möglich ist. Durch die Beschleunigungsparameter kann die Gesamttestdauer von Anfang an verkürzt werden.

Nachdem der erste Test an einem Motor oder auf einem Versuchstand abgeschlossen ist, wird das getestete Bauteil ausgewertet und mit Bauteilen verglichen, die nach einem praktischen Gebrauch gesammelt wurden. Durch Verwendung der genannten Beschleunigungsparameter kann der Test so kalibriert werden, daß genau dieselbe Belastung für jede separate Ermüdungscharakteristik erreicht wird wie in der Praxis. Wenn die Testergebnisse mit den praktischen Erfahrungen vergleichbar sind, können die Beschleunigungsparameter die Testdauer weiter verkürzen.

Das Verfahren zur Auswahl der kritischen Belastungszustände, das heißt für den Übergang von Tabelle 4 zu Tabelle 5, soll nachfolgend beschrieben werden.

Die einzige Figur zeigt diesbezüglich ein Flußdiagramm dieses Verfahrens.

In Block 1 des Verfahrens werden die Streßparameter SP1, ... SPi zur Gesamtbelastungsstärke von Block 2 (Tabelle 4) wie oben beschrieben durch zellenweise Multiplikation kombiniert.

Aus dieser Gesamtbelastungsstärke und dem Benutzerprofil CUP wird dann durch zellenweise Multiplikation (Blöcke 3, 4, 5, 6) wie oben erläutert der Faktor TSF berechnet.

Als nächstes wird in Block 7 beginnend bei 100% des Maximalwertes ein temporärer Schwellwert in der Gesamtbelastungsstärke (Tabelle 4) eingeführt, wobei alle Belastungsstärken unterhalb des Schwellwertes gleich Null gesetzt werden (Block 8). Diese testweise erzeugte Tabelle wird dann in Block 10 zellenweise mit dem Kundenprofil (Block 9) multipliziert, und wie oben erläutert wird in Block 11 durch Addition aller erhaltenen Produkte der Wert MSF berechnet.

Sodann wird in Block 13 der Quotient TSF/MSF berechnet, mit dessen Hilfe wie oben erläutert in den Blöcken 14 und 15 eine Gesamttestzeit berechnet werden kann, welche auf dem versuchsweise in Block 7 eingeführten Schwellwert beruht. Diese Gesamttestzeit wird in Block 16 in ein Diagramm eingetragen.

In Schritt 17 wird überprüft, ob der berechnete Eintrag in das Diagramm dort einen Maximalwert darstellt. Tut er dies nicht, wird über Schritt 18 ein neuer, kleinerer Schwellwert für Block 7 angenommen, und das erläuterte Verfahren wird erneut durchlaufen.

Sobald die im Diagramm eingetragene Gesamttestzeit ein Maximum angenommen hat, werden die zum aktuellen Schwellwert gehörigen Werte der kritischen Belastungszustände als Auswahl angenommen, und in den Schritten 19 und 20 werden auf dieser Basis die einzelnen Testzeiten in den kritischen Belastungszuständen berechnet.

**Patentansprüche**

1. Verfahren zur Prüfung von Bauteilen einer Brennkraftmaschine, wobei das Bauteil verschiedenen Belastungszuständen ausgesetzt wird,
   **dadurch gekennzeichnet, daß**
   die Zeitdauer, welche das Bauteil einem bestimmten Belastungszustand ausgesetzt wird, in Abhängigkeit von der relativen Zeitdauer festgelegt wird, welche das Bauteil während seiner realen Verwendung in diesem Belastungszustand verbringt.

2. Verfahren nach Anspruch 1,
   **dadurch gekennzeichnet, daß**
   die relative Zeitdauer, welche das Bauteil während seiner realen Verwendung in einem Belastungszustand verbringt, als Durchschnittswert aus Messdaten von realen Verwendungen des Bauteils bestimmt wird.

3. Verfahren nach Anspruch 1 oder 2,
   **dadurch gekennzeichnet, daß**
   die Zeitdauer, welche das Bauteil einem bestimmten Belastungszustand ausgesetzt wird, in Abhängigkeit von der Belastungsstärke dieses Belastungszustandes bestimmt wird.

4. Verfahren nach Anspruch 3,
   **dadurch gekennzeichnet, daß**
   die Belastungsstärke aus dem Einfluss verschiedener Stressparameter im jeweiligen Belastungszustand bestimmt wird.

5. Verfahren nach Anspruch 3 oder 4,
   **dadurch gekennzeichnet, daß**
   die Belastungsstärke eines Belastungszustandes aus den am Bauteil hervorgerufenen Veränderungen bestimmt wird.

6. Verfahren nach einem der Ansprüche 3 bis 5,
   **dadurch gekennzeichnet, daß**
   das Bauteil nur solchen Belastungszuständen ausgesetzt wird, deren Belastungsstärke oberhalb eines Schwellwertes liegt.

7. Verfahren nach Anspruch 6,
   **dadurch gekennzeichnet, daß**
   die Summe (TSF) der Produkte aus den Belastungsstärken und den Zeitdauern, welche das Bauteil während seiner realen Verwendung im zugehörigen Belastungszustand verbringt, gleich der Summe der Produkte aus den Belastungsstärken oberhalb des genannten Schwellwertes und den Zeitdauern, welche das Bauteil während der Prüfung im zugehörigen Belastungszustand verbringt, ist.

8. Verfahren nach einem der Ansprüche 1 bis 7,
   **dadurch gekennzeichnet, daß**

die verschiedenen Belastungszustände während der Prüfung des Bauteils zufallsgesteuert gewechselt werden.

9. Verfahren nach einem der Ansprüche 1 bis 8,
**dadurch gekennzeichnet, daß**
die Bauteile einer Brennkraftmaschine geprüft werden, und dass die Belastungszustände durch die Zustandsparameter der Drehzahl und der Last der Brennkraftmaschine beschrieben werden.

10. Verfahren nach einem der Ansprüche 1 bis 9,
**dadurch gekennzeichnet, daß**
die Gesamtdauer der Prüfung bei etwa gleichbleibender Belastung durch Veränderung von Beschleunigungsparameter variiert wird.

**Claims**

1. Method for testing components of an internal combustion engine, the component being subjected to different load states, **characterized in that** the time period for which the component is subjected to a specific load state is defined as a function of the relative time period which the component spends in this load state during its real use.

2. Method according to claim 1, **characterized in that** the relative time period which the component spends in a load state during its real use is determined as an average value formed from measured data of real uses of the component.

3. Method according to claim 1 or 2, **characterized in that** the time period for which the component is subjected to a specific load state is determined as a function of the severity of loading of this load state.

4. Method according to claim 3, **characterized in that** the severity of loading is determined from the influence of various stress parameters in the respective load state.

5. Method according to claim 3 or 4, **characterized in that** the severity of loading of a load state is determined from the changes brought about at the component.

6. Method according to one of claims 3 to 5, **characterized in that** the component is subjected only to load states whose severity of loading lies above a threshold value.

7. Method according to claim 6, **characterized in that** the sum (TSF) of the products of the severities of loading and the time periods which the component spends in the respective load state during its real use is equal to the sum of the products of the severities of loading above the aforesaid threshold value and the time periods which the component spends in the respective load state during the testing.

8. Method according to one of claims 1 to 7, **characterized in that** the various load states are changed randomly during the testing of the component.

9. Method according to one of claims 1 to 8, **characterized in that** the components of an internal combustion engine are tested, and **in that** the load states are described by the state parameters of the rotational speed and the load of the internal combustion engine.

10. Method according to one of claims 1 to 9, **characterized in that** the total duration of the testing is varied by changing acceleration parameters while the loading remains approximately the same.

**Revendications**

1. Procédé de test de composants d'un moteur à combustion interne, le composant étant soumis à différents états de charge, **caractérisé en ce que** la durée pendant laquelle le composant est soumis à un état de charge défini est déterminée en fonction de la durée relative passée par le composant dans cet état de charge pendant son utilisation réelle.

2. Procédé selon la revendication 1, **caractérisé en ce que** la durée relative que le composant passe dans un état de charge pendant son utilisation réelle est définie comme la valeur moyenne obtenue à partir des données d'utilisations réelles mesurées du composant.

3. Procédé selon la revendication 1 ou 2, **caractérisé en ce que** la durée pendant laquelle le composant est soumis à un état de charge est déterminée en fonction de l'intensité de charge de cet état de charge.

4. Procédé selon la revendication 3, **caractérisé en ce que** l'intensité de charge est déterminée à partir de l'influence de différents paramètres de contrainte dans l'état de charge respectif.

5. Procédé selon la revendication 3 ou 4, **caractérisé en ce que** l'intensité de charge d'un état de charge est déterminée à partir des modifications réalisées au niveau du composant.

6. Procédé selon l'une quelconque des revendications 3 à 5, **caractérisé en ce que** le composant n'est soumis qu'à des états de charge dont l'intensité de charge est supérieure à une valeur seuil.

7. Procédé selon la revendication 6, **caractérisé en ce que** la somme (TSF) des produits des intensités de charge et des durées que passe le composant pendant son utilisation réelle dans l'état de charge correspondant est égale à la somme des produits des intensités de charge supérieures à ladite valeur seuil et aux durées que passe le composant à l'état de charge correspondant pendant le test.

8. Procédé selon l'une quelconque des revendications 1 à 7, **caractérisé en ce que** les différents états de charge alternent de façon aléatoire pendant le test des composants.

9. Procédé selon l'une quelconque des revendications 1 à 8, **caractérisé en ce que** les composants d'un moteur à combustion interne sont testés et que les états de charge sont décrits par les paramètres d'état de la vitesse de rotation et de la charge du moteur à combustion interne.

10. Procédé selon l'une quelconque des revendications 1 à 9, **caractérisé en ce que** la durée totale du test varie à charge constante en fonction de la variation des paramètres d'accélération.

SP1  SP2  SP3  SP4  SPi

**1**
Kombination

**2**
Gesamt-
Belastungsst.

**3** Benutzerprofil
CUP 1...i

**4**
nächstes CUP

**5**
Multiplikation

**6**
TSF max
?

J                    N

J

**7**
Schwellwert
einführen

**8**
Kritische
Belastungsst.

**9**
worst case
CUP

**10**
Multiplikation

**11**
Nenner
MSF

**12**
Zähler
TSF

**13**
TSF/MSF

**14**
Testzeit in
1 Punkt

**15**
Testzeit für gewählten Schwellwert
berechnen

**16**
in Diagramm
eintragen

**17**
max. Sprung
?

N                    J

**18**
nächster
Schwellwert

**19**
Verteilung der
Testzeit durch CUP

**20**
Test erstellt

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6175812 B1
- US 5519333 A
- US 2700301 A
- US 5745390 A